# EUROPÄISCHE PATENTANMELDUNG

(11) **EP 4 000 398 A1**
(43) Veröffentlichungstag der Anmeldung: **25.05.2022**
(21) Anmeldenummer: 20209196.3
(22) Anmeldetag: 23.11.2020
(51) Int. Cl.: A01N 25/34, A01N 59/16, A01P 1/00, B32B 9/04, B32B 27/18, C08K 3/015, C08L 27/12

(54) **FOLIE MIT EINEM TRÄGERSUBSTRAT AUS EINEM KUNSTSTOFFMATERIAL**

(71) Anmelder: Hueck Folien Gesellschaft m.b.H., 4342 Baumgartenberg (AT)
(72) Erfinder: LINDMEIR, Thomas, 4224 Wartberg ob der Aist (AT); LORRET, Olivier, 4482 Ennsdorf (AT); GSTÖTTMAIER, Juliane, 4391 Waldhausen (AT); HÖLLMÜLLER, Alexander, 4482 Ennsdorf (AT)
(74) Vertreter: Burger, Hannes

(57) **Zusammenfassung**

Die Erfindung betrifft eine Folie (1a, 1b, 1c) mit einem Trägersubstrat (2) aus einem Kunststoffmaterial, wobei die Folie zumindest eine antimikrobielle und/oder antivirale Beschichtung (3) aufweist und das Trägersubstrat (2) aus zumindest einem Fluorpolymer hergestellt ist.

## Beschreibung

Die Erfindung betrifft eine Folie mit einem Trägersubstrat aus einem Kunststoffmaterial.

Darüber hinaus betrifft die Erfindung einen Verbundwerkstoff.

Weiters hat die Erfindung ein Verfahren zur Herstellung einer Folie zum Gegenstand.

Üblicherweise müssen Oberflächen mit Desinfektionsmittel gereinigt werden, um diese von Viren, Pilzen und Bakterien zu befreien. Nachteilig hierbei ist es, dass Viren, Pilze und Bakterien mit der Zeit Resistenzen gegen Desinfektionsmittel bilden können. Darüber hinaus ist eine regelmäßige Desinfektion der Oberflächen erforderlich, um Neuansiedlungen von Viren, Bakterien und Pilzen zu verhindern.

Bei Gebäuden und Fahrzeugen, insbesondere in Innenbereich davon, sind auch die Brandschutzeigenschaften der verwendeten Materialien zu beachten.

Es ist daher eine Aufgabe der Erfindung, die oben genannten Nachteile des Stands der Technik zu überwinden und einen auch innenraumtauglichen Schutz von Oberflächen vor Viren, Bakterien und Pilzen zu schaffen.

Diese Aufgabe wird mit einer Folie der eingangs genannten Art erfindungsgemäß dadurch gelöst, dass die Folie zumindest eine antimikrobielle und/oder antivirale Beschichtung aufweist und das Trägersubstrat aus zumindest einem Fluorpolymer hergestellt ist.

Aufgrund der brandhemmenden Eigenschaften sowie der hohen mechanischen Belastbarkeit und Widerstandsfähigkeit gegenüber Chemikalien von Fluorpolymeren ermöglicht die erfindungsgemäße Lösung die Realisierung eines sehr effektiven antimikrobiellen und/oder antiviralen Schutzes von Gebäuden und Fahrzeugen. Die Erfindungsgemäße Lösung kann beispielsweise für die Realisierung von Trennwänden, Ausstattungen von öffentlichen Gebäuden, wie Flughäfen, Krankenhäuser, etc. Durch die antimikrobielle und/oder antivirale Beschichtung kann auf eine aufwendige chemische Desinfektion verzichtet werden. Zudem wird aufgrund des geringen Gewichtes die Verwendung der erfindungsgemäßen Folie für die Herstellung leichter und funktioneller Konstruktionen ermöglicht.

Als besonders vorteilhaft hinsichtlich der mechanischen und brandhemmenden Eigenschaften sowie der chemischen Beständigkeit hat sich eine Variante der Erfindung bewährt, bei welcher Ethylen-Tetrafluorethylen-Copolymere (ETFE), Polyvinylidenfluoride (PVDF), Perfluoralkoxy-Polymere (PFA), Tetrafluorethylen-Hexafluorpropylen-Copolymere (FEP).

An dieser Stelle sei darauf hingewiesen, dass zwischen dem Trägersubstrat und der Beschichtung noch weitere Schichten, insbesondere Folien und/oder Haftvermittlerschichten, angeordnet sei können. Allerdings kann die Beschichtung auch direkt auf das Trägersubstrat aufgebracht sein.

Weiters sei angemerkt, dass in dem vorliegenden Zusammenhang der Begriff "antimikrobiell" im Sinne von antiviral, antibakteriell und fungizid verstanden wird, wobei es ausreicht, wenn nur eine dieser Eigenschaften verwirklicht ist.

Zur Erzielung der antiviralen und antibakteriellen Eigenschaften, kann die antimikrobielle und/oder antivirale Beschichtung antimikrobielle und/oder antivirale Additive aufweisen.

Als besonders vorteilhaft hat sich herausgestellt, dass die antimikrobiellen und/oder antiviralen Additive organische Biozide und/oder Metalle, Halbmetalle, Metall- oder Halbmetallverbindungen umfassen, wie beispielsweise Silber Ionen, Silberverbindungen, Wolframoxide, Molybdänoyid, Zinkmolybdänoxide, Kupfer, Kupferverbindungen, Titandioxid, Aluminium, Gold, Goldverbindungen, Platin, Platinverbindungen, Iridium, Iridiumverbindungen, Zinn, Zinnverbindungen, Antimon, Antimonverbindungen.

Eine sehr dauerhafte und gute Fixierung der antimikrobiellen und/oder antiviralen Additive lässt sich dadurch erzielen, dass die antimikrobielle und/oder antivirale Beschichtung eine Matrix aus einem Bindemittel, insbesondere eine Polymermatrix, aufweist, in welche die antimikrobiellen und/oder antiviralen Additive eingebettet sind.

Eine sehr gute Verbindung der Beschichtung mit der Trägerfolie lässt sich dadurch erzielen, dass die Matrix zumindest ein Acrylat und/oder ein Polyurethan und/oder ein Fluorpolymer umfasst.

Eine Schichtdicke der Beschichtung kann 0,1 - 100 µm, bevorzugt 0,1 - 30 µm, besonders bevorzugt 0,5 - 20 µm, insbesondere 1 - 10 µm betragen.

Als besonders vorteilhaft hinsichtlich einer antimikrobiellen und/oder antiviralen Wirkung hat sich eine Weiterbildung der Erfindung erwiesen, gemäß welcher die Additive als Partikel mit einer einem Äquivalenzdurchmesser von 5 nm - 50 µm, bevorzugt 10 nm bis 20 µm, besonders bevorzugt 50 nm - 10 µm, entsprechenden Partikelgröße ausgebildet sind.

Bei der bevorzugten Ausführungsform sind die Partikel so homogen in dem gesamten Volumen der Matrix bzw. der Beschichtung verteilt, dass in jeder erdenklichen Schnittebene durch die Beschichtung parallel zum Trägersubstrat antiviral aktive Partikel vorhanden sind. Dadurch sind Abnutzungs-, Abtragungs- bzw. Abrieberscheinungen unproblematisch hinsichtlich der antiviralen Eigenschaften der Folie. Solche Abnutzungserscheinungen (Abtragung von sehr dünnen Schichten) können z.B. durch Umwelteinflüsse wie Temperatur, Feuchtigkeit bzw. Sonneneinstrahlung und/oder. durch Reinigungsvorgänge oder dergleichen entstehen.

Um die Folie auf einen Gegenstand aufzubringen und diesen mit der Folie zu beschichten, kann es vorgesehenen sein, dass die Folie zumindest eine Klebeschicht aufweist, wobei das Trägersubstrat zwischen der Kleberschicht und der antimikrobiellen und/oder antiviralen Beschichtung angeordnet ist.

Eine Variante der Erfindung, welche sich besonders für die Verwendung als Raumteiler bzw. Trennwand eignet, besteht darin, dass die Folie die antimikrobielle und/oder antivirale Beschichtung an zumindest zwei voneinander abgewandten Seiten aufweist.

Die oben genannte Aufgabe kann auch mit einem Verbundwerkstoff der eingangs genannten Art erfindungsgemäße dadurch gelöst werden, dass er zumindest eine Folie nach einem der Ansprüche 1 bis 9 aufweist. Bei dem Verbundwerkstoff kann es sich um eine Kombination der erfindungsgemäßen Folie mit anderen Werkstoffen, beispielsweise weiteren Folien oder Platten, beispielsweise aus Kunststoffen und/oder mineralischen und/oder metallischen Materialien handeln.

Weiters kann die oben genannte Aufgabe auch mit einem Verfahren der eingangs genannten Art erfindungsgemäß dadurch gelöst werden, dass ein Trägermaterial aus einem Fluorpolymer bereitgestellt wird und eine antimikrobielle und/oder antivirale Beschichtung durch Aufbringen eines Lacks und antimikrobieller und/oder antiviraler Additive erzeugt wird.

Vorteilhafterweise ist es vorgesehen, dass der Lack ein acrylat-, polyurethan- oder fluorploymerbasierter Lack ist.

Gemäß einer bevorzugten Weiterbildung der Erfindung kann es vorgesehen sein, dass der Lack partiell oder vollflächig aufgedruckt wird.

Zum besseren Verständnis der Erfindung wird diese anhand der nachfolgenden Figuren näher erläutert.

Es zeigen jeweils in stark vereinfachter, schematischer Darstellung:
- Fig. 1: Eine erste Variante einer erfindungsgemäße Folie;
- Fig. 2: Eine zweite Variante einer erfindungsgemäßen Folie:
- Fig. 3: Eine dritte Variante einer erfindungsgemäßen Folie;
- Fig. 4: Einen erfindungsgemäßen Verbundwerkstoff.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

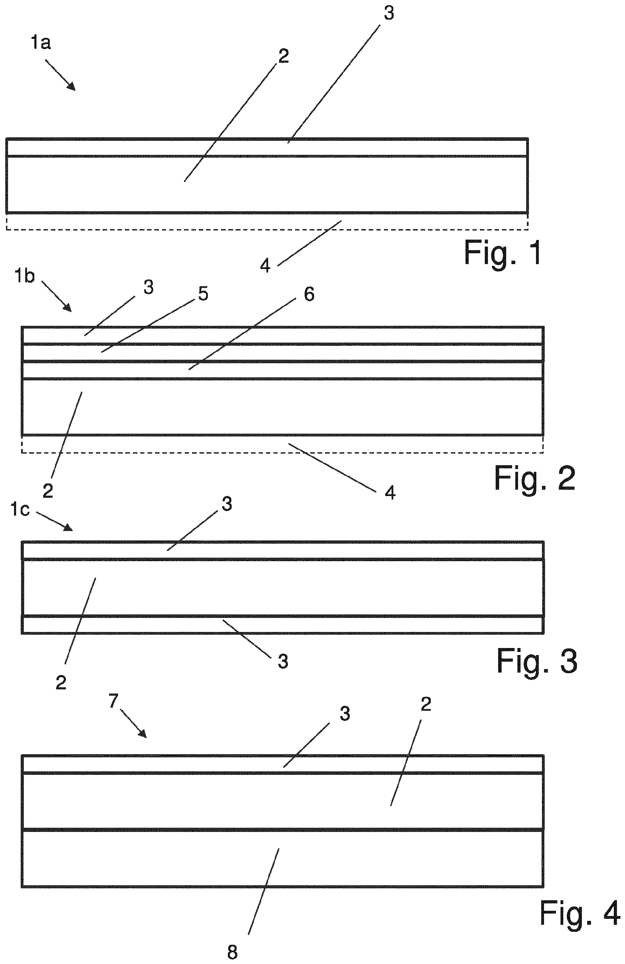

Gemäß Fig. 1 weist eine erfindungsgemäße Folie la ein Trägersubstrat 2 aus einem Fluorpolymer auf. Das Fluorpolymer ausgewählt ist bevorzugt ausgewählt aus der Gruppe: Ethylen-Tetrafluorethylen-Copolymere (ETFE), Polyvinylidenfluoride (PVDF), Perfluoralkoxy-Polymere (PFA), Tetrafluorethylen-Hexafluorpropylen-Copolymere (FEP).

Weiters ist die Folie 1a mit einer antimikrobiellen und/oder antiviralen Beschichtung 3 versehen. Die antimikrobielle und/oder antivirale Beschichtung 3 weist antimikrobielle und/oder antivirale Additive, insbesondere organische Biozide und/oder Metalle, Halbmetalle, Metall- oder Halbmetallverbindungen umfassen, wie beispielsweise Silber Ionen, Silberverbindungen, Wolframoxide, Molybdänoyid, Zinkmolybdänoxide, Kupfer, Kupferverbindungen, Titandioxid, Aluminium, Gold, Goldverbindungen, Platin, Platinverbindungen, Iridium, Iridiumverbindungen, Zinn, Zinnverbindungen, Antimon, Antimonverbindungen auf.

Die antimikrobiellen und/oder antiviralen Additive können in eine Matrix, insbesondere eine Polymermatrix, der Beschichtung fest eingebettet sein. Die Matrix kann beispielsweise ein Acrylat und/oder ein Polyurethan und/oder ein Fluorpolymer umfassen. Zur Herstellung der Matrix kann ein Lack zum Einsatz kommen. Der Lack kann ein Bindemittels beispielsweise mittels eines wasserverdünnbaren Acrylatsystems oder eines UV-härtenden Polyurethansytems aufweisen. Weiters können auch wasserverdünnbare oder lösungsmittelbasierbare Fluorploymerbindemittel verwendet werden. Als Bindemittel können 1 oder 2 Komponenten Systeme zum Einsatz kommen. Der Lack kann vollflächig oder partiell auf das Trägersubstrat 2 aufgebracht, beispielsweise aufgedruckt, werden. Die antimikrobiellen und/oder antiviralen Additive können vor dem Aufbringen auf das Trägersubstrat 2 dem Lack beigemischt werden. Die Additive können als Partikel mit einer einem Äquivalenzdurchmesser von 5 nm - 50 µm, bevorzugt 10 nm bis 20 µm, besonders bevorzugt 50 nm - 10 µm, entsprechenden Partikelgröße ausgebildet sein. Eine Schichtdicke der Beschichtung 3 kann 0,1 - 100 µm, bevorzugt 0,1 - 30 µm, besonders bevorzugt 0,5 - 20 µm, insbesondere 1 - 10 µm, betragen. Die Partikel können so homogen in dem gesamten Volumen der Matrix bzw. der Beschichtung 3 verteilt sein, dass in jeder erdenklichen Schnittebene durch die Beschichtung 3 parallel zum Trägersubstrat 2 antiviral aktive Partikel vorhanden sind.

Weiters ist eine Einfärbung des Lacks mittels Farbpigmenten und/oder Farbstoffen und/oder durch die Zumischung von Effektpigmenten, insbesondere von metallischen oder farbkippenden Effektpigmenten, möglich.

Wie aus Fig. 1 und 2 ersichtlich ist, kann auch eine Klebeschicht 4 vorgesehen sein, um die Folie 1a, 1b an einem Gegenstand, beispielsweise einer Wand oder Tür, zu befestigen. Das Trägersubstrat 2 ist herbei zwischen der Kleberschicht und der antimikrobiellen und/oder antiviralen Beschichtung 3 angeordnet.

Die antimikrobielle und/oder antivirale Beschichtung 3 kann, wie in Figur 1 dargestellt direkt auf das Trägersubstrat 2 aufgebracht, insbesondere aufgedruckt, werden. Alternativ können aber zwischen dem Trägersubstrat 2 und der antimikrobiellen und/oder antiviralen Beschichtung 3 auch noch eine oder mehrere Zwischenschichten 5, 6 angeordnet sein.

Gemäß Fig. 3 kann die Folie 1c beidseitig beschichtet sein und die antimikrobielle und/oder antivirale Beschichtung 3 an zwei voneinander abgewandten bzw. gegenüberliegenden Seiten aufweisen.

Fig. 4 zeigt einen Verbundwerkstoff 7, bei welchem die Folie auf einem weiteren Material, beispielsweise einer anderen Folie, Folienverbund oder Platte aufgebracht ist, um zusätzlich weitere Funktionalitäten, wie mechanische Stabilität etc. zu realisieren. Auf diese Weise können Fertigbauteile mit antibakteriellen und/oder antiviralen Eigenschaften hergestellt werden. Natürlich ist es auch möglich, dass der Verbundwerkstoff auch beid- oder mehrseitig an außenliegenden Flächen mit der antimikrobiellen und/oder antiviralen Beschichtung 3 bzw. der erfindungsgemäßen Folie versehen ist.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1a: Folie
- 1b: Folie
- 1c: Folie
- 2: Trägersubstrat
- 3: Beschichtung
- 4: Klebeschicht
- 5: Zwischenschicht
- 6: Zwischenschicht
- 7: Verbundwerkstoff
- 8: Material

## Patentansprüche

1. Folie (la, 1b, 1c) mit einem Trägersubstrat (2) aus einem Kunststoffmaterial, **dadurch gekennzeichnet, dass** die Folie zumindest eine antimikrobielle und/oder antivirale Beschichtung (3) aufweist und das Trägersubstrat (2) aus zumindest einem Fluorpolymer hergestellt ist.

2. Folie nach Anspruch 1, **dadurch gekennzeichnet, dass** das Fluorpolymer ausgewählt ist aus der Gruppe: Ethylen-Tetrafluorethylen-Copolymere (ETFE), Polyvinylidenfluoride (PVDF), Perfluoralkoxy-Polymere (PFA), Tetrafluorethylen-Hexafluorpropylen-Copolymere (FEP).

3. Folie nach Anspruch 1 oder 2, **dadurch gekennzeichnet, dass** die antimikrobielle und/oder antivirale Beschichtung (3) antimikrobielle und/oder antivirale Additive aufweist.

4. Folie nach Anspruch 3, **dadurch gekennzeichnet, dass** die antimikrobiellen und/oder antiviralen Additive organische Biozide und/oder Metalle, Halbmetalle, Metall- oder Halbmetallverbindungen umfassen, wie beispielsweise Silber Ionen, Silberverbindungen, Wolframoxide, Molybdänoyid, Zinkmolybdänoxide, Kupfer, Kupferverbindungen, Titandioxid, Aluminium, Gold, Goldverbindungen, Platin, Platinverbindungen, Iridium, Iridiumverbindungen, Zinn, Zinnverbindungen, Antimon, Antimonverbindungen.

5. Folie nach Anspruch 3 oder 4, **dadurch gekennzeichnet, dass** die antimikrobielle und/oder antivirale Beschichtung eine Matrix aus einem Bindemittel, insbesondere eine Polymermatrix, aufweist, in welche die antimikrobiellen Additive eingebettet sind.

6. Folie nach Anspruch 5, **dadurch gekennzeichnet, dass** die Matrix zumindest ein Acrylat und/oder ein Polyurethan und/oder ein Fluorpolymer umfasst.

7. Folie nach einem der Ansprüche 1 bis 6, **dadurch gekennzeichnet, dass** eine Schichtdicke der Beschichtung (3) 0,1 - 100 µm, bevorzugt 0,1 - 30 µm, bevorzugt 0,5 - 20 µm, insbesondere 1 - 10 µm, besonders bevorzugt 50 nm - 10 µm, beträgt.

8. Folie nach einem der Ansprüche 1 bis 7, **dadurch gekennzeichnet, dass** die Additive als Partikel mit einer einem Äquivalenzdurchmesser von 5 nm - 50 µm, bevorzugt 10 nm bis 20 µm, besonders bevorzugt 50 nm - 10 µm, entsprechenden Partikelgröße ausgebildet sind.

9. Folie nach Anspruch 8, **dadurch gekennzeichnet, dass** die Partikel so homogen in dem gesamten Volumen der Matrix bzw. der Beschichtung (3) verteilt sind, dass in jeder erdenklichen Schnittebene durch die Beschichtung (3) parallel zum Trägersubstrat (2) antiviral aktive Partikel vorhanden sind.

10. Folie nach einem der Ansprüche 1 bis 9, **dadurch gekennzeichnet, dass** sie zumindest eine Klebeschicht (4) aufweist, wobei das Trägersubstrat (2) zwischen der Kleberschicht und der antimikrobiellen und/oder antiviralen Beschichtung (3) angeordnet ist.

11. Folie nach einem der Ansprüche 1 bis 10, **dadurch gekennzeichnet, dass** die Folie (1c) die antimikrobielle und/oder antivirale Beschichtung (3) an zumindest zwei voneinander abgewandten Seiten aufweist.

12. Verbundwerkstoff (7), **dadurch gekennzeichnet, dass** er zumindest eine Folie (la, 1b, 1c) nach einem der Ansprüche 1 bis 11 aufweist.

13. Verfahren zur Herstellung einer Folie nach einem der Ansprüche 1 bis 11 **dadurch gekennzeichnet, dass** ein Trägermaterial aus einem Fluorpolymer bereitgestellt wird und eine antimikrobielle und/oder antivirale Beschichtung durch Aufbringen eines Lacks und antimikrobieller und/oder antiviraler Additive erzeugt wird.

14. Verfahren nach Anspruch 13, **dadurch gekennzeichnet, dass** der Lack ein acrylat-, polyurethan- oder fluorploymerbasierter Lack ist.

15. Verfahren nach Anspruch 13 oder 14, **dadurch gekennzeichnet, dass** der Lack partiell oder vollflächig aufgedruckt wird.
